# EUROPÄISCHE PATENTSCHRIFT

(11) **EP 1 048 510 B1**
(45) Veröffentlichungstag und Bekanntmachung des Hinweises auf die Patenterteilung: **03.11.2004**
(21) Anmeldenummer: 00108591.9
(22) Anmeldetag: 20.04.2000
(51) Int. Cl.: B60N 2/22, B60N 2/18, B60N 2/48

(54) **Kraftfahrzeug-Rücksitzbank**
Bench for automotive vehicles
Banquette pour véhicules automobiles

(30) Priorität: 30.04.1999 DE 19919697
(43) Veröffentlichungstag der Anmeldung: 02.11.2000
(73) Patentinhaber: KEIPER GmbH & Co. KG, 67657 Kaiserslautern (DE)
(72) Erfinder: Armbrust, Karl-Peter, 67715 Geiselberg (DE)
(74) Vertreter: Patentanwälte Hosenthien-Held und Dr. Held

(56) Entgegenhaltungen:
- EP-A- 0 865 960
- DE-A- 2 952 064
- DE-A- 3 943 008
- DE-A- 19 726 800
- GB-A- 2 316 863

## Beschreibung

Die Erfindung betrifft eine Kraftfahrzeug-Rücksitzbank mit den Merkmalen des Oberbegriffs des Anspruches 1.

Aus der DE 197 26 800 A1 ist ein Fahrzeugsitz bekannt, bei dem ein Lehnenoberteil mit einer Kopfstütze mittels zweier Gelenkbeschläge am Lehnenunterteil angebracht und damit in seiner Neigung einstellbar ist. Die Lehne als Ganzes ist wiederum relativ zur Fahrzeugstruktur in ihrer Neigung einstellbar. Die DE 39 43 008 A1 offenbart eine Kraftfahrzeug-Rücksitzbank der eingangs genannten Art, welche als sogenannte Schlepplehne ausgebildet ist, d.h. mit einer SitzlängseinstelIung wird die an der Fahrzeugstruktur geführte Lehne nachgezogen. In der DE 29 52 064 A1 ist ein Fahrzeugsitz beschrieben, bei dem eine Koppelstange zwischen Unterbau und Lehnenoberteil dafür sorgt, daß bei einer Neigungseinstellung des Lehnenunterteils das Lehnenoberteil mit der Kopfstütze seine Neigung beibehält.

Der Erfindung liegt die Aufgabe zu Grunde, eine Kraftfahrzeug-Rücksitzbank der eingangs genannten Art zu verbessern. Diese Aufgabe wird erfindungsgemäß durch eine Kraftfahrzeug-Rücksitzbank mit den Merkmalen des Anspruches 1 gelöst. Vorteilhafte Ausgestaltungen sind Gegenstand der Unteransprüche.

Dadurch, daß eine Neigungsvorrichtung zur Einstellung der Neigung der Sitzfläche vorgesehen ist, kann eine individuell an den jeweiligen Sitzbenutzer angepasste Neigung der Sitzfläche eingestellt werden. Zugleich sorgt die Neigungsvorrichtung dafür, daß zusammen mit der Sitzlängseinstellung eine Einstellung der Neigung der Sitzfläche erfolgt. Damit werden die Oberschenkel in gleicher Weise unterstützt, insbesondere wenn bei kürzerer Sitzlängseinstellung der Sitzbenutzer seine Beine stärker anwinkelt. Die Neigungsvorrichtung ist also so ausgebildet, daß sie sowohl bei einer Sitzlängseinstellung wirksam wird als auch zusätzlich individuell anpassbar ist, d.h. eine individuell angepasste Neigungseinstellung erlaubt.

Indem bei einer Bewegung des Lehnenunterteils die Kopfstütze ihre Neigung, also den Winkel zur Fahrzeugstruktur, beibehält, kann die Kopfstütze immer den gleichen Winkel zum Kopf des Sitzbenutzers einnehmen, vorzugsweise auch den gleichen Abstand zum Kopf des Sitzbenutzers. Somit kann die Kopfstütze im Crashfall ihre volle Wirkung entfalten. Das Beibehalten der Neigung der Kopfstütze umfaßt auch eine geringfügige Änderung um ein paar Winkelgrade, die beispielsweise baulich bedingt oder durch innere Bewegungen von ansonsten starren Bauteilen im Crashfall entstehen. Die Kopfstütze steht über ein am Lehnenunterteil angelenktes Lehnenoberteil mit dem Lehnenunterteil in Verbindung. Das Lehnenoberteil behält dabei seine Neigung - wie die Kopfstütze - bei, wodurch der Nackenbereich des Sitzbenutzers zusätzlich geschützt wird. Die gewünschte Beibehaltung der Neigung kann beispielsweise durch eine Führung des Lehnenoberteils in einer oder mehreren fahrzeugstrukturfesten Kulissen erfolgen.

Die Struktur des Fahrzeugsitzes weist in Unterschienen geführte Oberschienen zur Sitzlängseinstellung auf, um die Position des Sitzes in Längsrichtung des Kraftfahrzeuges einstellen zu können. Durch die Sitzlängseinstellung lassen sich vom Sitzbenutzervorgenommene Neigungsänderungen der Lehne ausgleichen. Über die Kopplung zwischen dem Lehnenunterteil und den Schienen, beispielsweise indem das Lehnenunterteil an den Oberschienen angelenkt ist, erfolgt mit der Sitzlängseinstellung zugleich eine Bewegung des Lehnenunterteils in näherungsweise vertikaler Richtung. Dies hat den Vorteil, daß die Kopfstütze die für die Kopfhöhe des Sitzbenutzers passende Höhe einnimmt. Es liegt dann eine Schlepplehne vor, die aufgrund der Beibehaltung der Neigung des Lehnenoberteils eine Knickbewegung durchführt.

Eine einfach herzustellenden Neigungsvorrichtung weist beispielsweise wenigstens eine erste Kulisse zur Führung einer Schwinge auf, wobei die Schwinge mit einer zweiten Kulisse zur Führung einer Übertragungsstange versehen ist. Die Übertragungsstange wird manuell oder motorisch in die gewünschte Höhe eingestellt.

In einer bevorzugten Ausführungsform schwenkt die Kopfstütze im Crashfall nach vorne. Dadurch kommt Kopfbereich des Sitzbenutzers besser in Anlage an die Kopfstütze, insbesondere wenn diese nach hinten geneigt eingestellt ist. Dies schützt den Sitzbenutzer besser vor Verletzungen, insbesondere vor dem sogenannten HWS-Syndrom. Eine Feder, welche beispielsweise die Kopfstütze nach vorne bewegt, kann zugleich auch Energiespitzen, also einen Teil der Bewegungsenergie des zurückfallenden Sitzbenutzers, aufnehmen und so Belastungsspitzen vermeiden.

Im folgenden ist die Erfindung anhand von sechs in der Zeichnung dargestellten Ausführungsbeispielen näher erläutert. Es zeigen
- Fig. 1: eine perspektivische Ansicht der Struktur des linken Teiles einer dreiteiligen Rücksitzbank,

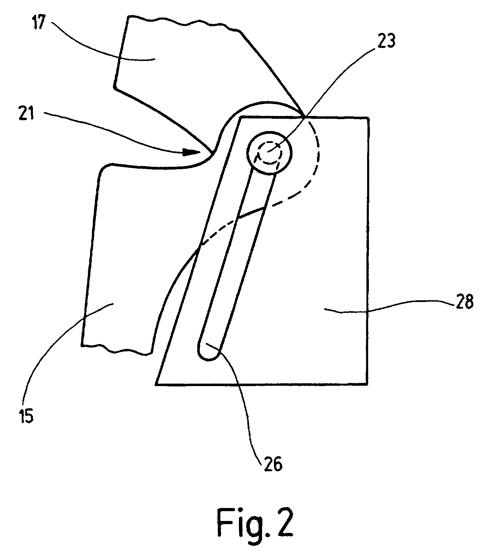

- Fig. 2: eine Teilansicht in Richtung des Pfeiles II in Fig. 1,

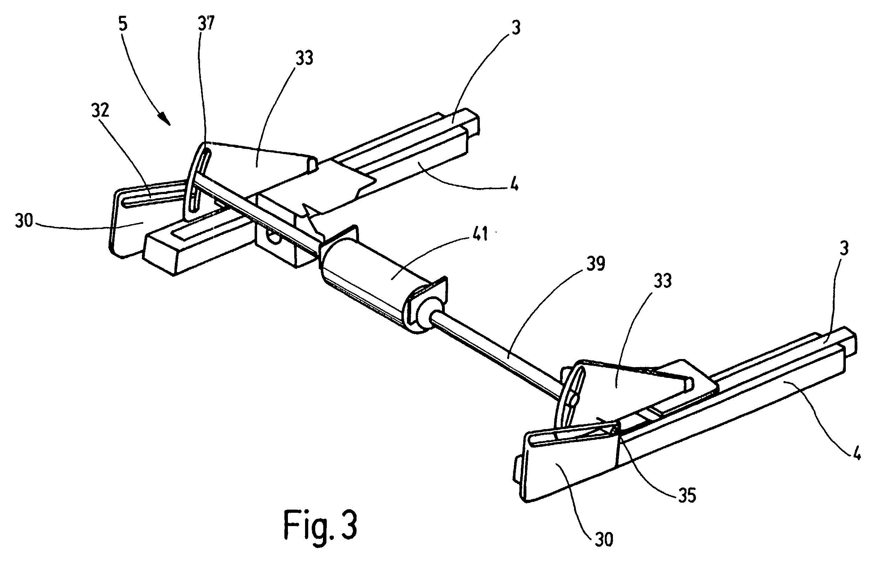

- Fig. 3: eine Teilansicht der Neigungsvorrichtung aus Fig. 1.

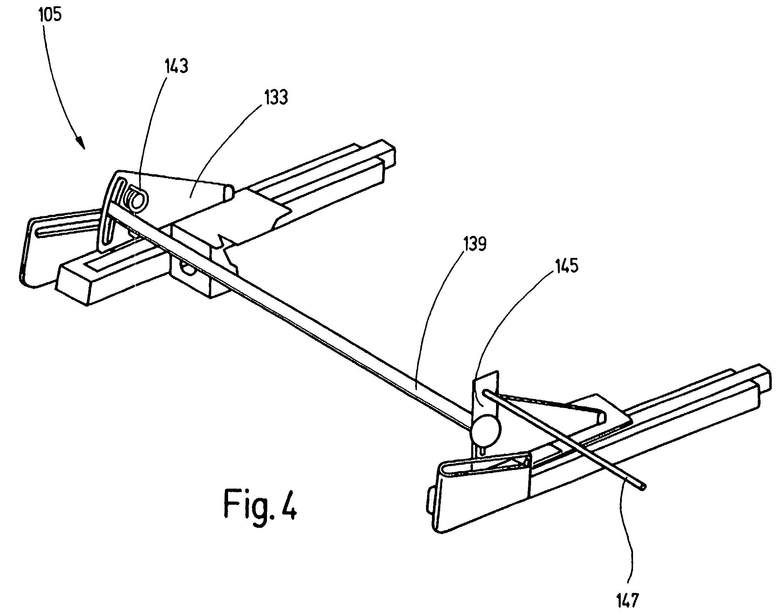

- Fig. 4: eine Ansicht, Fig. 3 entsprechend, einer zweiten Neigungsvorrichtung,

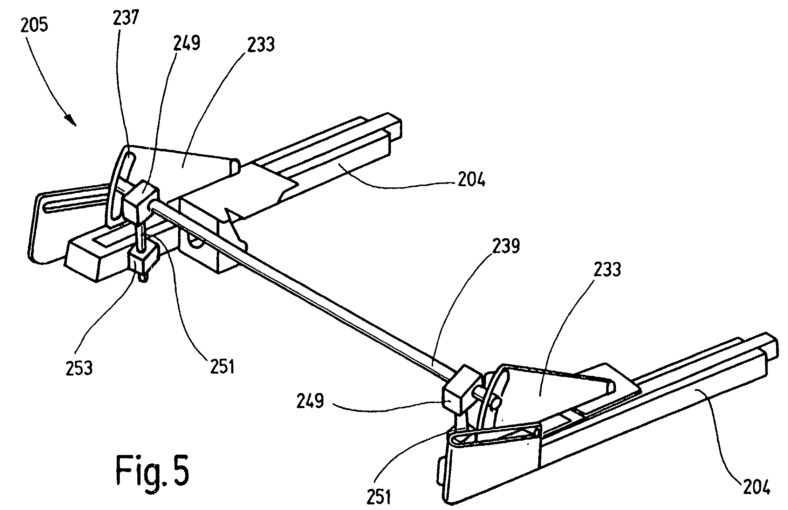

- Fig. 5: eine Ansicht, Fig. 3 entsprechend, einer dritten Neigungsvorrichtung,

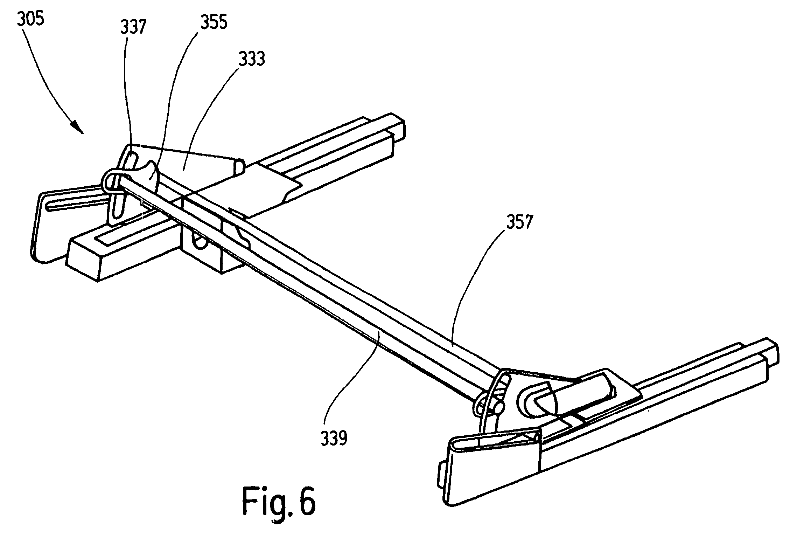

- Fig. 6: eine Ansicht, Fig. 3 entsprechend, einer vierten Neigungsvorrichtung,

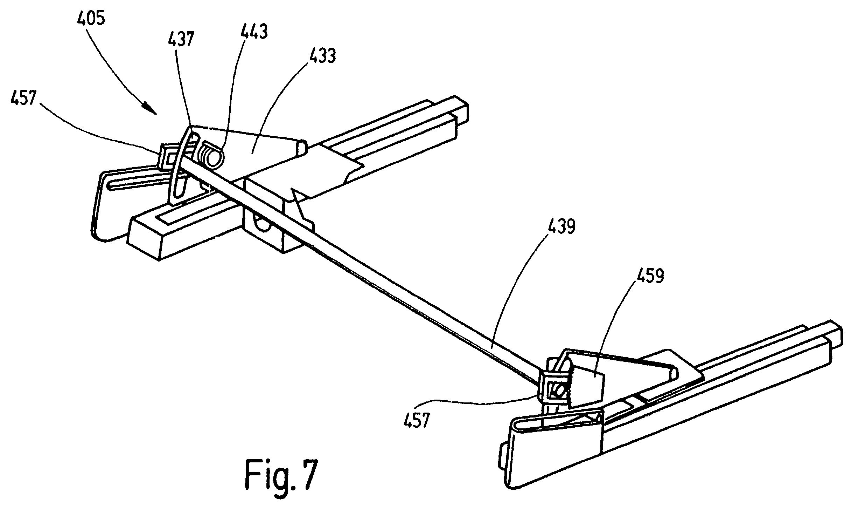

- Fig. 7: eine Ansicht, Fig. 3 entsprechend, einer fünften Neigungsvorrichtung,
- Fig. 8: eine perspektivische Ansicht der Struktur eines sechsten Ausführungsbeispiels,
- Fig. 9: eine Teilansicht von Fig. 8 im Bereich einer hinteren Führung,
- Fig. 10: eine Teilansicht entsprechend Fig. 9 aus einer anderen Richtung,
- Fig. 11: eine Seitenansicht entsprechend Fig. 9 im Normalgebrauch,
- Fig. 12: eine Seitenansicht entsprechend Fig. 11 im Crashfall

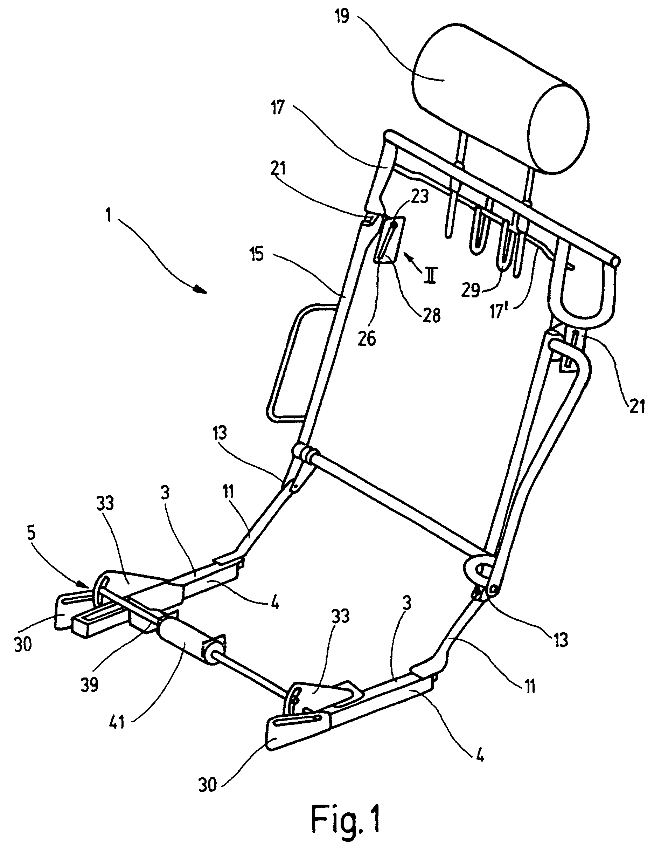

Von einer dreiteiligen Rücksitzbank für ein Kraftfahrzeug ist in Fig. 1 nur die Struktur 1 des auf der linken Fahrzeugseite angeordneten Teiles ohne Polsterung dargestellt. Die Struktur 1 weist einen Unterbau mit zwei Oberschienen 3, zwei Unterschienen 4 und einer später genauer beschriebenen Neigungsvorrichtung 5 auf. Jede Oberschiene 3 ist in einer der Unterschienen 4 beweglich geführt. Die Unterschienen 4 sind an der Fahrzeugstruktur des Kraftfahrzeuges befestigt. An der Neigungsvorrichtung 5 und an den in Fahrtrichtung hinteren Teilen der Oberschienen 3 wird bei der Montage der Rücksitzbank die Sitzschale angebracht.

An den Oberschienen 3 ist eine nachfolgend beschriebene Lehnenstruktur angebracht. Hierzu ist an jedem hinteren Ende einer Oberschiene 3 ein nach hinten geneigter, fußförmiger Adapter 11 befestigt, der an seinem oberen Ende über ein unteres Gelenk 13 mit dem unteren Ende eines Lehnenunterteils 15 verbunden ist. Das beispielsweise als Rohrrahmen ausgebildete Lehnenunterteil 15 kann mit Trägern für Seitenwangen versehen sein. Die unteren Gelenke 13 zwischen dem Lehnenunterteil 15 und den Adaptern 11 bestehen vorzugsweise jeweils aus einem Bolzen, der durch Bohrungen in zwei Laschen des Lehnenunterteils 15 und in dem dazwischen angeordneten Adapter 11 gesteckt ist.

Am oberen Ende des Lehnenunterteils 15 ist ein Lehnenoberteil 17 angelenkt. Das mit gleicher Breite beispielsweise bügelförmig ausgebildete Lehnenoberteil 17 trägt eine höhen- und neigungseinstellbare Kopfstütze 19. Im folgenden bezieht sich beim Lehnenoberteil 17 und bei der Kopfstütze 19 die Neigung" auf den Winkel gegenüber der Fahrzeugstruktur des Kraftfahrzeuges. Die Anlenkung des Lehnenoberteils 17 erfolgt durch zwei obere Gelenke 21, die nahezu gleich wie die unteren Gelenke 13 aufgebaut sind. Der jeweilige obere Bolzen 23 hat jedoch eine größere Länge und ist als Gleitstück ausgebildet. Dieser obere Bolzen 23 ist links und rechts vom oberen Gelenk 21 in einer oberen Kulisse 26 einer oberen Kulissenführung 28 geführt. Die insgesamt vier oberen Kulissenführungen 28 pro Struktur 1 sind an der nicht dargestellten Fahrzeugstruktur befestigt.

Eine bügelförmige, hintere Führung 29 besteht aus einem horizontal verlaufenden Querabschnitt, zwei symmetrisch von den Enden des Querabschnitts nach unten verlaufenden Zwischenabschnitten und je einem wieder nach oben gebogenen Endabschnitt im Anschluß an jedem Zwischenabschnitt. Die hintere Führung 29 nimmt zwischen jedem Zwischenabschnitt und dem zugehörigen Endabschnitt eine Querstange 17' des Lehnenbberteils 17 auf. Die Endabschnitte und Zwischenabschnitte verlaufen in einem Bereich von mindestens der Länge der oberen Kulissen 26 in gleichem Abstand zueinander und in in gleicher Richtung wie die oberen Kulissen 26. Die hintere Führung 29 ist ebenfalls an der Fahrzeugstruktur befestigt.

Das Lehnenunterteil 15 und das Lehnenoberteil 17 bilden eine Knick-Schlepp-Lehne. Wird die Längseinstellung der Struktur 1 geändert, indem die Oberschienen 3 relativ zu den Unterschienen 4 verfahren werden, so bewegen die Oberschienen 3 die Adapter 11, die wiederum über die unteren Gelenke 13 am Lehnenunterteil 15 angreifen. Unter Änderung des Winkels zwischen Adapter 11 und Lehnenunterteil 15 bewegt sich das Lehnenunterteil 15 mit. Durch die Umlenkung über die unteren Gelenke 13 erfolgt diese Bewegung des Lehnenunterteils 15 in einem Winkel zur Bewegung der Oberschienen 3, d.h., wenn die Oberschienen 3 nach vorne fahren, wird das Lehnenunterteil 15 nach unten mitgeschleppt und umgekehrt.

Durch die Bewegung des Lehnenunterteils 15 wird über die oberen Gelenke 21 auch das Lehnenoberteil 17 bewegt. Das Lehnenoberteil 17 behält jedoch seine Neigung relativ zur Fahrzeugstruktur bei oder nahezu bei, im Gegensatz zum Lehnenunterteil 15, und bewegt sich lediglich in der durch die oberen Kulissen 26 und die hintere Führung 29 vorgegebenen, in der Regel linearen Richtung. An den oberen Gelenken 21 ergibt sich daher eine Knickbewegung. Bewegen sich die Oberschienen 3 nach vorne, so bewegt sich das Lehnenoberteil 17 nach unten und umgekehrt. Mit dem Lehnenoberteil 17 behält auch die Kopfstütze 19 ihre eingestellte Neigung bei. Wahlweise folgt die Kopfstütze 519 einer vorgegebenen Bahn, um eine leichte Neigungsänderung des Lehnenoberteils 17 auszugleichen. Die Kulissen 26 sind in ihrem Verlauf so ausgebildet, daß bei Anlage des Sitzbenutzers an das Lehnenunterteil 15 und das Lehnenoberteil 17 sich der Abstand zwischen dem Kopf des Sitzbenutzers und der Kopfstütze 19 nicht ändert.

Die Neigungsvorrichtung 5 weist zwei vordere Kulissenführungen 30 auf, die jeweils am vorderen Ende der entsprechenden Unterschiene 4 angebracht sind und mit einer schräg nach vorne ansteigenden vorderen Kulisse 32 versehen sind. An jeder Oberschiene 3 ist eine Schwinge 33 angelenkt, welche nach vorne geklappt ist und gegenüber der vorderen Kulissenführung 30 leicht nach innen versetzt ist. Von der Schwinge 33 steht ein vorderer Bolzen 35 seitlich nach außen ab, welcher in der vorderen Kulisse 32 geführt ist.

Jede Schwinge 33 weist eine weitere Kulisse 37 mit bogenförmiger Gestalt auf, deren Krümmungsmittelpunkt mit der Anlenkstelle der Schwinge 33 zusammenfällt. Diese weitere Kulisse 37 steht in einem gedachten Schnittpunkt mit der vorderen Kulisse 32 ungefähr senkrecht zu dieser. Der näher zur Anlenkstelle der Schwinge 33 gelegene Rand der weiteren Kulisse 37 ist gezähnt. Eine Übertragungsstange 39 ist mit jedem ihrer beiden zahnradförmig ausgebildeten Enden in eine der weiteren Kulissen 37 gesteckt. Ein Elektromotor 41, der bei der fertigen Rücksitzbank an der Sitzschale befestigt und an dieser abgestützt ist, kann die Übertragungsstange 39 drehen, so daß diese sich innerhalb der weiteren Kulissen 37 bewegt und ihre Höhe ändert. Da der Elektromotor 41 und mit ihm die Sitzschale auf der Übertragungsstange 39 sitzen, werden diese ebenfalls angehoben bzw. abgesenkt. Damit ändert sich die Neigung der nach Bepolsterung der Sitzschale definierten Sitzfläche dieses Teils der Rücksitzbank.

Wird die Sitzlängseinstellung verändert, also die beiden Oberschienen 3 relativ zu den beiden Unterschienen 4 verschoben, so bewegen sich die beiden Schwingen 33 mit den vorderen Bolzen 35 relativ zu den vorderen Kulissenführungen 30. Aufgrund des ansteigenden Verlaufs der vorderen Kulissen 32 bewegen sich bei einer Bewegung der Oberschienen 3 nach vorne die Schwingen 33 nach oben und heben dadurch die Sitzschale vorne an, erhöhen also die Neigung der Sitzfläche, um die Oberschenkel des Sitzbenutzers immer in gleicher Weise zu unterstützen. Entsprechend verringert sich die Neigung der Sitzfläche, wenn die Oberschienen 3 nach hinten gefahren werden. Der Hüftpunkt, also der Schwerpunkt des Sitzbenutzers, befindet sich oberhalb des gedachten Drehpunktes der Sitzschale und folgt bei dieser Neigungsänderung, welche der Sitzlängseinstellung überlagert ist, der Schienenführung. Die Länge der Sitzfläche bleibt bei den beschriebenen Bewegungen unverändert, d.h. konstant.

In einem zweiten Ausführungsbeispiel, das mit dem vorstehend beschriebenen ersten Ausführungsbeispiel bis auf die nachfolgend beschriebenen Abweichungen übereinstimmt, weist die Neigungsvorrichtung 105 eine durchgängige Übertragungsstange 139 ohne Motor auf. Auf der rechten Seite der Übertragungsstange 139 nimmt eine an der Schwinge 133 angebrachte Feder 143 das auf der Übertragungsstange 139 lastende Gewicht der Sitzschale und der Oberschenkel des Sitzbenutzers auf. Auf der linken Seite steht die Übertragungsstange 139 in Getriebeeingriff mit einem Sperrgetriebe 145. Die Antriebswelle 147 des Sperrgetriebes 145 kann über ein Handrad oder über ein Schrittschaltgetriebe angetrieben werden.

In einem dritten Ausführungsbeispiel, das wie das zweite Ausführungsbeispiel in seiner Neigungsvorrichtung 205 eine durchgängige Übertragungsstange 239 ohne Motor aufweist und ansonsten mit dem ersten Ausführungsbeispiel bis auf die nachfolgend beschriebenen Abweichungen übereinstimmt, sind die Schwingen 233 mit Kulissen 237 ohne Verzahnung versehen. Die glatte Übertragungsstange 239 weist im Bereich ihrer Enden je ein Spindellager 249 für eine Spindel 251 auf. Die Spindel 251 dreht sich elektrisch angetrieben in einer Spindelmutter 253, welche an der jeweiligen Unterschiene 204 befestigt ist.

In einem vierten Ausführungsbeispiel, das wie das dritte Ausführungsbeispiel in seiner Neigungsvorrichtung 305 eine durchgängige, glatte Übertragungsstange 339 ohne Motor und Schwingen 333 mit Kulissen 337 ohne Verzahnung aufweist und ansonsten mit dem ersten Ausführungsbeispiel bis auf die nachfolgend beschriebenen Abweichungen übereinstimmt, wird die Übertragungsstange 339 im Bereich ihrer Enden von je einem Bügelstück 355 umgriffen. Das Bügelstück 355 wird durch ein nach hinten weisendes Zahnsegment geschlossen und ist drehbar an der jeweiligen Schwinge 333 gelagert. Hinter dem Bügelstück 355 ist eine Welle 357 vorgesehen, die in der Schwinge 333 gelagert ist, die über das Zahnsegment in Eingriff mit dem Bügelstück 355 steht und die von einem Elektromotor 341 angetrieben wird. Durch Drehen der Welle 357 schwenkt das Bügelstück 355, welches als Kulisse für die Übertragungsstange 339 wirkt und so letztere in der weiteren Kulisse 337 bewegt.

In einem fünften Ausführungsbeispiel, das wie das dritte Ausführungsbeispiel in seiner Neigungsvorrichtung 405 eine durchgängige, glatte Übertragungsstange 439 und Schwingen 433 mit Kulissen 437 ohne Verzahnung aufweist und ansonsten mit dem ersten Ausfiihrungsbeispiel bis auf die nachfolgend beschriebenen Abweichungen übereinstimmt, liegt die Übertragungsstange 439 im Bereich ihrer Enden auf je einer Feder 443 auf, welche wie im zweiten Ausführungsbeispiel an der Schwinge 433 angebracht ist. Die Enden der Übertragungsstange 439 werden jeweils von einer gabelförmigen Klinke 457 umgriffen, welche in ein an der Schwinge 433 gelagertes Zahnsegment 459 greift und über einen Hebel oder Bowdenzug betätigt wird.

Das sechste Ausführungsbeispiel stimmt bis auf die nachfolgend beschriebenen Abweichungen mit dem ersten Ausführungsbeispiel überein. Die gleichen Teile sind daher mit um 500 höheren Bezugszeichen versehen. Anstelle der Führung 29 und der Querstange 17' ist eine hintere Führung 560 vorgesehen, die nicht nur der definierten Führung des Lehnenoberteils 517 bei einer Sitzlängseinstellung dient, sondern auch eine besondere Funktion im Crashfall erfüllt.

Die hintere Führung 560 weist im Bereich der rechten oberen Ecke des Lehnenoberteils 517 ein dreieckiges Knotenblech 563 auf, das mit zwei Seiten am Lehnenoberteil 517 angebracht ist. Das Knotenblech 563 ist mit einer Bohrung versehen, die im Schwenkbereich eines auf der Vorderseite des Knotenblechs 563 drehbar angebrachten, parallel zum Knotenblech 563 schwenkenden Riegels 569 steht.

Durch die Bohrung im Knotenblech 563 ist der runde Schaft 571' eines T-förmigen Gleitstücks 571 gesteckt. Dabei ist der eckige Kopf 571'' des Gleitstücks 571 auf der nach hinten gewandten Seite des Knotenblechs 563 angeordnet. Am Fuß des Schaftes 571' ist eine Verdickung oder eine andere Sicherung gegen ein Verlassen der Bohrung vorgesehen. Der Riegel 569 greift in eine am Schaft 571' vorgesehene Vertiefung ein und sichert das Gleitstück 571 dadurch gegen eine Bewegung in axialer Richtung.

Der Kopf 571'' des Gleitstücks 571 ist im Inneren eines fahrzeugstrukturfesten Führungselements 574 angeordnet. Das Führungselement 574 ist als Hohlprofil ausgebildet, welches einen im Querschnitt T-förmigen, nach vorne offenen Kanal 576 zur Aufnahme und Führung des Kopfes 571'' aufweist. Der Kanal 576 verläuft parallel zur oberen Kulisse 526. Hinter dem Knotenblech 563 ist um den Schaft 571' eine Druckfeder 579 gewickelt, die an einem Ende an einer am Knotenblech 563 anliegenden, den Schaft 571' umschließenden Unterlegscheibe 581 und am anderen Ende an einer Verdickung des Schaftes 571' in der Nähe des Kopfes 571'' abgestützt ist. Durch den Riegel 569 wird die Druckfeder 579 gespannt gehalten.

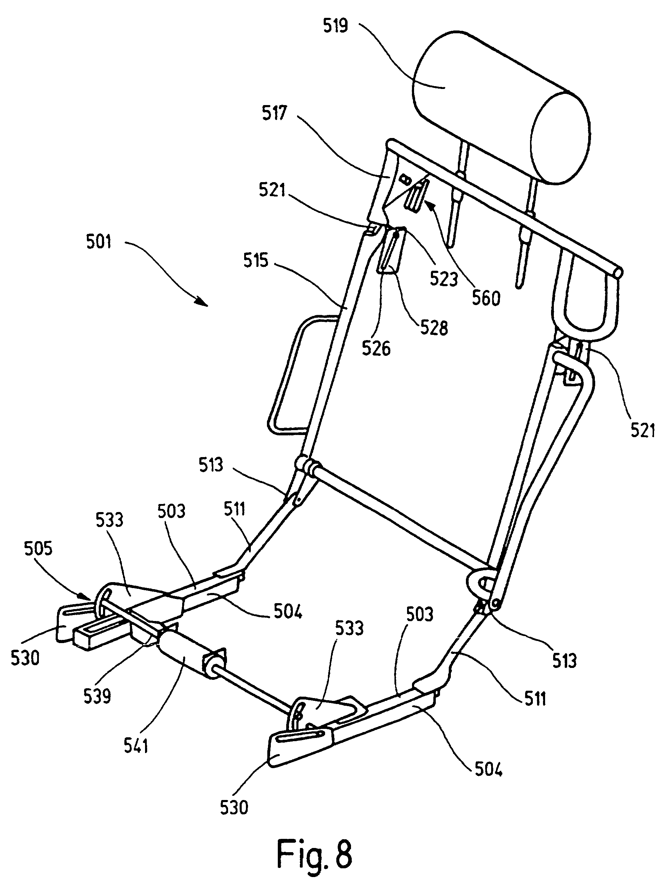

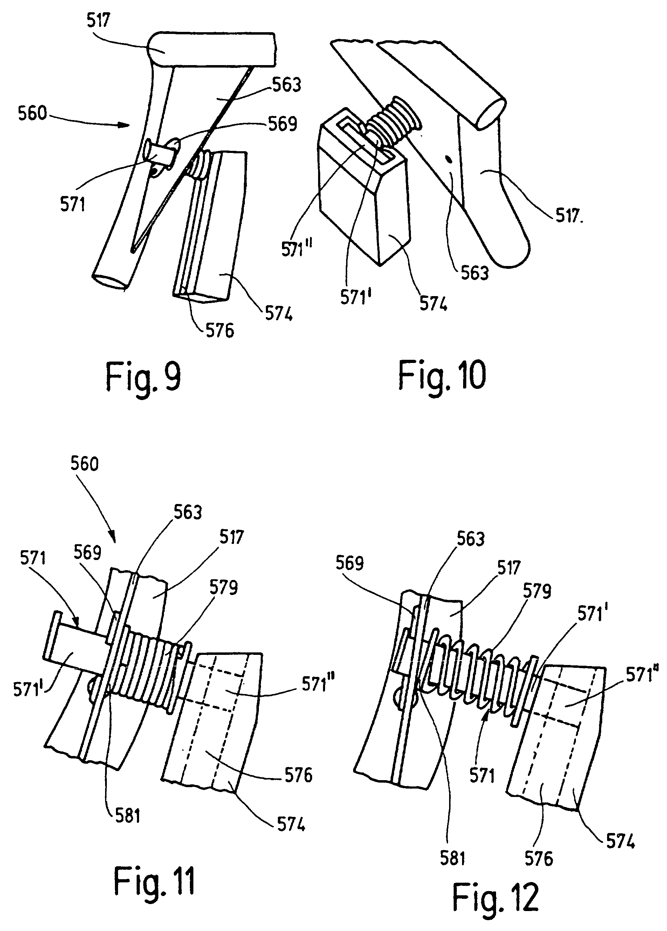

Beim beschriebenen und in den Fig. 8 bis 11 dargestellten Normalgebrauch sorgt die hintere Führung 560 zusammen mit den oberen Kulissenführungen 528 dafür, daß bei einer Sitzlängseinstellung und Bewegung des Lehnenunterteils 515 das Lehnenoberteil 517 und damit die Kopfstütze 519 die eingenommene Neigung beibehält. Im Crashfall wird durch geeignete Vorrichtungen, beispielsweise von einem Beschleunigungssensor ausgelöst über einen Seilzug, der Riegel 569 zurückgezogen, so daß dieser das Gleitstück 571 freigibt, wodurch sich die Druckfeder 579 rasch entspannen kann. Über die Unterlegscheibe 581 und das Knotenblech 563 wird dadurch das Lehnenoberteil 517 vom Führungselement 574 weg nach vorne gedrückt, wie in Fig. 9 dargestellt, wobei das Lehnenoberteil 517 eine Schwenkbewegung um die oberen Gelenke 521 durchführt. Das Lehnenoberteil 517 nimmt die Kopfstütze 519 mit, wodurch sich die oben genannten Vorteile ergeben. Die Verdickung am Fuß des Schaftes 571' dient als Anschlag für den Riegel 569 oder das Knotenblech 563, was zur Begrenzung der Bewegung des Lehnenoberteils 517 beiträgt. Fällt der Sitzbenutzer auf die Kopfstütze 519 zurück, nimmt die Druckfeder 579 einen Teil seiner Bewegungsenergie auf, so daß Belastungsspitzen vermieden werden.

### Bezugszeichenliste

- 1, 501: Struktur
- 3, 503: Oberschiene
- 4, 204, 504: Unterschiene
- 5, 105, 205, 305, 405, 505: Neigungsvorrichtung
- 11, 511: Adapter
- 13, 513: unteres Gelenk
- 15, 515: Lehnenunterteil
- 17,517: Lehnenoberteil
- 17': Querstange
- 19, 519: Kopfstütze
- 21, 521: oberes Gelenk
- 23, 523: oberer Bolzen
- 26, 526: obere Kulisse
- 28, 528: obere Kulissenführung
- 29: hintere Führung
- 30, 530: vordere Kulissenführung
- 32: vordere Kulisse
- 33, 133, 233, 333, 433, 533: Schwinge
- 35: vorderer Bolzen
- 37, 237, 337, 437: weitere Kulisse
- 39, 139, 239, 339, 439, 539: Übertragungsstange
- 41, 341, 541: Elektromotor
- 143, 443: Feder
- 145: Sperrgetriebe
- 147: Antriebswelle
- 249: Spindellager
- 251: Spindel
- 253: Spindelmutter
- 355: Bügelstück
- 457: Klinke
- 459: Zahnsegment
- 560: hintere Führung
- 563: Knotenblech
- 569: Riegel
- 571: Gleitstück
- 571': Schaft
- 571'': Kopf
- 574: Führungselement
- 576: Kanal
- 579: Druckfeder
- 581: Unterlegscheibe

## Patentansprüche

1. Kraftfahrzeug-Rücksitzbank, deren Struktur (1) wenigstens ein bewegliches Lehnenunterteil (15), ein am Lehnenunterteil (15) angelenktes Lehnenoberteil (17), wenigstens eine über das Lehnenoberteil (17) mit dem Lehnenunterteil (15) in Verbindung stehende Kopfstütze (19), die bei einer Bewegung des Lehnenunterteils (15) ihre Neigung beibehält, und in Unterschienen (4; 204) geführte Oberschienen (3) zur Sitzlängseinstellung aufweist, wobei das Lehnenunterteil (15) an die Schienen (3) gekoppelt ist und mit der Sitzlängseinstellung eine Bewegung des Lehnenunterteils (15) erfolgt, **dadurch gekennzeichnet, daß** eine Neigungsvorrichtung (5; 105; 205; 305; 405) zur Einstellung der Neigung der Sitzfläche vorgesehen ist, mittels welcher eine an den jeweiligen Sitzbenutzer angepasste Neigung der Sitzfläche einstellbar ist, wobei zusammen mit der Sitzlängseinstellung auch eine Einstellung der Neigung der Sitzfläche erfolgt.

2. Kraftfahrzeug-Rücksitzbank nach Anspruch 1, **dadurch gekennzeichnet, daß** das Lehnenoberteil (17) in wenigstens einer fahrzeugstrukturfesten Kulisse (26) geführt ist.

3. Kraftfahrzeug-Rücksitzbank nach Anspruch 1 oder 2, **dadurch gekennzeichnet, daß** das Lehnenunterteils (15) an die Oberschienen (3) angelenkt ist.

4. Kraftfahrzeug-Rücksitzbank nach einem der Ansprüche 1 bis 3, **dadurch gekennzeichnet, daß** die Neigungsvorrichtung (5) wenigstens eine erste Kulisse (32) zur Führung einer Schwinge (33; 133; 233; 333; 433) aufweist, wobei die Schwinge (33; 133; 233; 333; 433) mit einer zweiten Kulisse (37; 237; 337; 437) zur Führung einer Übertragungsstange (39; 139; 239; 339; 439) versehen ist.

5. Kraftfahrzeug-Rücksitzbank nach Anspruch 2 oder 4, **dadurch gekennzeichnet, daß** die vorhandenen Kulissen (26, 32, 37; 237; 337; 437) die einstellbaren Neigungen begrenzen.

6. Kraftfahrzeug-Rücksitzbank nach einem der Ansprüche 1 bis 5, **dadurch gekennzeichnet, daß** wenigstens ein Elektromotor (41; 341) vorgesehen ist, welcher einzustellenden Teile (3, 15, 39; 139; 339) bewegt.

7. Kraftfahrzeug-Rücksitzbank nach einem der Ansprüche 1 bis 6, **dadurch gekennzeichnet, daß** die Kopfstütze (519) im Crashfall nach vorne schwenkt.

8. Kraftfahrzeug-Rücksitzbank nach Anspruch 7, **dadurch gekennzeichnet, daß** eine Feder (579) zum Schwenken der Kopfstütze (519) und zur Aufnahme von Energiespitzem vorgesehen ist.

## Claims

1. Motor vehicle rear seat, whose structure (1) has at least one moveable lower back rest member (15), an upper back rest member (17) which is articulated to the lower back rest member (15), at least one head rest (19) which is connected to the lower back rest member (15) by means of the upper back rest member (17) and which retains the inclination thereof when the lower back rest member (15) is moved, and upper rails (3) which are guided in lower rails (4; 204) for longitudinally adjusting the seat, the lower back rest member (15) being coupled to the rails (3) and a movement of the lower back rest member (15) being brought about when the seat is longitudinally adjusted, **characterised in that** an inclination device (5; 105; 205; 305; 405) is provided for adjusting the inclination of the seat face, by means of which device the seat face inclination which is adapted to the respective seat user can be adjusted, an adjustment of the inclination of the seat face also being brought about together with the longitudinal adjustment of the seat.

2. Motor vehicle rear seat according to claim 1, **characterised in that** the upper back rest member (17) is guided in at least one slotted member (26) which is fixed to the vehicle structure.

3. Motor vehicle rear seat according to claim 1 or 2, **characterised in that** the lower back rest member (15) is articulated to the upper rails (3).

4. Motor vehicle rear seat according to any one of claims 1 to 3, **characterised in that** the inclination device (5) has at least one first slotted member (32) for guiding a pivoting member (33; 133; 233; 333; 433), the pivoting member (33; 133; 233; 333; 433) being provided with a second slotted member (37; 237; 337; 437) for guiding a transmission rod (39; 139; 239; 339; 439).

5. Motor vehicle rear seat according to claim 2 or 4, **characterised in that** the slotted members (26, 32, 37; 237; 337; 437) provided limit the adjustable inclinations.

6. Motor vehicle rear seat according to any one of claims 1 to 5, **characterised in that** at least one electric motor (41; 341) is provided and moves parts (3, 15, 39; 139; 339) which are to be adjusted.

7. Motor vehicle rear seat according to any one of claims 1 to 6, **characterised in that** the head rest (519) pivots forwards in the event of a crash.

8. Motor vehicle rear seat according to claim 7,
**characterised in that** a sprang (579) is provided in order to pivot the head rest (519) and in order to absorb energy peaks.

## Revendications

1. Banquette arrière de véhicule automobile dont la structure (1) présente au moins une partie inférieure de dossier de siège (15) mobile, une partie supérieure de dossier de siège (17) articulée au niveau de la partie inférieure de dossier de siège (15), au moins un appui-tête (19) relié à la partie inférieure de dossier de siège (15) par l'intermédiaire de la partie supérieure de dossier de siège (17), ledit appuie-tête conservant son inclinaison en cas de déplacement de la partie inférieure de dossier de siège (15) et des rails supérieurs (3) guidés dans les rails inférieurs (4 ; 204) pour régler la longueur du siège, moyennant quoi la partie inférieure de dossier de siège (15) est couplée aux rails (3) et un déplacement de la partie inférieure de dossier de siège (15) a lieu avec le réglage de la longueur du siège, **caractérisée par le fait qu'**un dispositif inclineur (5 ; 105 ; 205 ; 305 ; 405) est prévu pour régler l'inclinaison de la surface assise, à l'aide duquel on peut régler une inclinaison adaptée au passager respectif occupant le siège, moyennant quoi un réglage de l'inclinaison de la surface assise a également lieu conjointement avec le réglage de la longueur du siège.

2. Banquette arrière de véhicule automobile selon la revendication 1, **caractérisée par le fait que** la partie supérieure de dossier de siège (17) est guidée dans au moins une coulisse (26) fixée à la structure du véhicule.

3. Banquette arrière de véhicule automobile selon l'une des revendications 1 ou 2, **caractérisée par le fait que** la partie inférieure de dossier de siège (15) est articulée au niveau des rails supérieurs (3).

4. Banquette arrière de véhicule automobile selon l'une quelconque des revendications 1 à 3, **caractérisée par le fait que** le dispositif inclineur (5) présente au moins une première coulisse (32) pour guider une manivelle oscillante (33 ; 133 ; 233 ; 333 ; 433), moyennant quoi la manivelle oscillante (33 ; 133 ; 233 ; 333 ; 433) est pourvue d'une deuxième coulisse (37 ; 237 ; 337 ; 437) pour guider une tige de transmission (39 ; 139 ; 239 ; 339 ; 439).

5. Banquette arrière de véhicule automobile selon l'une des revendications 2 ou 4, **caractérisée par le fait que** les coulisses (26, 32, 37 ; 237 ; 337 ; 437) présentes délimitent les inclinaisons réglables.

6. Banquette arrière de véhicule automobile selon l'une quelconque des revendications 1 à 5, **caractérisée par le fait qu'**au moins un moteur électrique (41 ; 341) est prévu, lequel déplace les parties (3, 15, 39 ; 139 ; 339) à régler.

7. Banquette arrière de véhicule automobile selon l'une quelconque des revendications 1 à 6, **caractérisée par le fait que** l'appuie-tête (519) pivote vers l'avant en cas d'accident.

8. Banquette arrière de véhicule automobile selon la revendication 7, **caractérisée par le fait qu'**un ressort (579) est prévu pour pivoter l'appuie-tête (519) et pour recevoir les pointes d'énergie.
